(19) Europäisches Patentamt / European Patent Office / Office européen des brevets

(11) **EP 4 663 615 A1**

(12) **EUROPEAN PATENT APPLICATION**
published in accordance with Art. 153(4) EPC

(43) Date of publication:
**17.12.2025   Bulletin 2025/51**

(21) Application number: **24753311.0**

(22) Date of filing: **05.02.2024**

(51) International Patent Classification (IPC):
**C03C 17/34** (2006.01)     **B32B 3/24** (2006.01)
**B32B 17/06** (2006.01)     **C03C 17/42** (2006.01)
**G02B 5/00** (2006.01)     **G02B 5/02** (2006.01)
**G09F 9/00** (2006.01)

(52) Cooperative Patent Classification (CPC):
**B32B 3/266; B32B 17/06; C03C 17/34;**
**C03C 17/42; G02B 5/00; G02B 5/02; G09F 9/00**

(86) International application number:
**PCT/JP2024/003721**

(87) International publication number:
**WO 2024/166868 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.02.2023   JP 2023016958**

(71) Applicant: **AGC INC.**
**Chiyoda-ku,**
**Tokyo 1008405 (JP)**

(72) Inventors:
• **ARATA Kenji**
**Tokyo 100-8405 (JP)**
• **FUJIE Yohei**
**Tokyo 100-8405 (JP)**

(74) Representative: **Müller-Boré & Partner**
**Patentanwälte PartG mbB**
**Friedenheimer Brücke 21**
**80639 München (DE)**

(54) **GLASS LAMINATE, DISPLAY DEVICE, DEVICE, AND METHOD FOR PRODUCING GLASS LAMINATE**

(57)     This glass laminate 10 has: a glass substrate 20 that has a first main surface 20A and a second main surface 20B; a functional layer 30 containing one or more layers selected from among an anti-glare layer, an anti-reflection layer, and an anti-finger print layer, the functional layer 30 being provided on the glass substrate 20 nearer to the first main surface 20A; and a colored layer 40 containing a hole formation region provided with a plurality of holes 46, the colored layer 40 being provided on the glass substrate 20 nearer to the second main surface 20B. The visible light transmittance of the hole formation region is 5% or greater.

*FIG. 2*

EP 4 663 615 A1

**Description**

TECHNICAL FIELD

The present invention relates to a glass laminate, a display device, a device, and a method for producing a glass laminate.

BACKGROUND ART

In a display device such as a car navigation device or a smartphone, a cover material is used as a front plate of a touch panel or a display panel. As this kind of cover material, a configuration using a glass laminate including a decorative layer having a light shielding property on one main surface is known. In recent years, there has been known a technique of improving designability of the cover material in a state where no image is displayed. For example, Patent Literature 1 discloses that a decorative sheet including a pattern portion and a plurality of transmission portions is provided on a surface of a cover material of a display device. According to Patent Literature 1, an image is visually recognized through the transmission portions in the state where the image is displayed, and the pattern portion is visually recognized in the state where no image is displayed, thereby improving the designability.

CITATION LIST

PATENT LITERATURE

Patent Literature 1: WO 2020/040195

SUMMARY OF INVENTION

TECHNICAL PROBLEM

However, in the display device in Patent Literature 1, there is a concern that the outermost surface of a cover member may be scratched. In addition, in the configuration in which the plurality of transmission portions are provided in the pattern portion, a boundary between a region in which the transmission portion is formed in the pattern portion and a region in which no transmission portion is formed may be visually recognized (that is, seamlessness may decrease), and there is a concern to cause a user to feel uncomfortable. Therefore, it is required to improve the scratch resistance and the seamlessness.

An object of the present invention is to provide a glass laminate, a display device, a device, and a method for producing a glass laminate, which are capable of improving the scratch resistance and the seamlessness.

SOLUTION TO PROBLEM

A glass laminate including:

a glass substrate having a first main surface and a second main surface;
a functional layer provided on a first main surface side of the glass substrate and including any one or more selected from an antiglare layer, an antireflection layer, and an anti-finger print; and
a colored layer provided on a second main surface side of the glass substrate and having a hole-formed region in which a plurality of holes are provided, in which
the hole-formed region has a visible light transmittance of 5% or more.

A display device according to the present disclosure includes: the above glass laminate; and an irradiation unit provided on the second main surface side of the glass laminate and configured to irradiate the glass laminate with light.

A display device according to the present disclosure includes: the above glass laminate; and a display panel provided on the second main surface side so as to face the hole-formed region, in which an area of the hole-formed region is larger than an area of the display panel.

A display device according to the present disclosure includes: the above glass laminate; and a light source unit provided on the second main surface side so as to face the hole-formed region.

A device according to the present disclosure includes: the above glass laminate; and an optical sensor provided on the second main surface side so as to face the hole-formed region.

A method for producing a glass laminate according to the present disclosure includes: preparing a glass substrate having a first main surface and a second main surface; forming a functional layer including any one or more selected from an antiglare layer, an antireflection layer, and an anti-finger print layer on a first main surface side of the glass substrate; and forming, on a second main surface side of the glass substrate, a colored layer having a hole-formed region in which a plurality of holes are provided, in which the hole-formed region has a visible light transmittance of 5% or more.

ADVANTAGEOUS EFFECTS OF INVENTION

According to the present invention, the scratch resistance can be improved and the seamlessness can be improved.

BRIEF DESCRIPTION OF DRAWINGS

FIG. 1 is a schematic diagram showing a device according to a first embodiment.

FIG. 2 is a schematic cross-sectional view of the device according to the first embodiment.

FIG. 3 is a schematic top view of a colored layer in a glass laminate according to the first embodiment.

FIG. 4 is a schematic diagram illustrating a preferred shape of a hole.

FIG. 5 is a schematic diagram illustrating a preferred shape of the hole.

FIG. 6 is a schematic cross-sectional view showing a procedure of forming the colored layer by transfer decoration.

FIG. 7 is a schematic cross-sectional view showing the procedure of forming the colored layer by transfer decoration.

FIG. 8 is a schematic cross-sectional view of a device according to a second embodiment.

FIG. 9 is a schematic top view of a colored layer in a glass laminate according to the second embodiment.

FIG. 10 is a schematic cross-sectional view of a device according to a third embodiment.

DESCRIPTION OF EMBODIMENTS

A glass laminate according to the present disclosure includes: a glass substrate having a first main surface and a second main surface; a functional layer provided on a first main surface side of the glass substrate and including any one or more selected from an antiglare layer, an antireflection layer, and an anti-finger print layer; and a colored layer provided on a second main surface side of the glass substrate and having a hole-formed region in which a plurality of holes are provided, in which the hole-formed region has a visible light transmittance of 5% or more.
In addition, a display device according to the present disclosure includes: the above glass laminate; and an irradiation unit provided on the second main surface side of the glass laminate and configured to irradiate the glass laminate with light.
Preferred embodiments of the present invention are described below in detail with reference to the accompanying drawings. Note that, the present invention is not limited to the embodiment and, in the case where there are a plurality of embodiments, also includes a combination of the embodiments. In addition, numerical values include rounding ranges.

(First Embodiment)

It is preferable that, in the glass laminate according to a first embodiment, an interval between centers of the holes adjacent to each other in the hole-formed region is less than 40 $\mu$m, and an opening ratio, which is a ratio of a total area of the plurality of holes to a whole area of the hole-formed region, is 25% or more.
In addition, the display device according to the first embodiment preferably includes: the above glass laminate; and a display panel provided on the second main surface side so as to face the hole-formed region, in which an area of the hole-formed region is larger than an area of the display panel.

(Device)

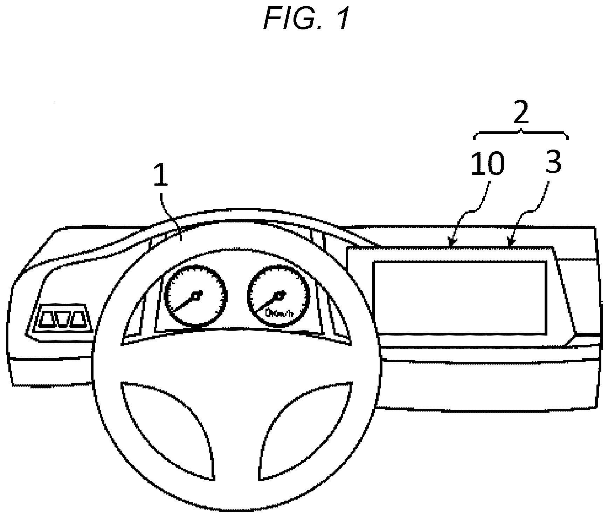

FIG. 1 is a schematic diagram showing a device according to the first embodiment. As shown in FIG. 1, a device 2 according to the first embodiment is a display device provided in a vehicle, and is, for example, provided in a front side of a steering shaft 1 in the vehicle. The device 2 includes an irradiation unit 3 and a glass laminate 10. The irradiation unit 3 is a device that irradiates the glass laminate 10 with light. The glass laminate 10 is used as a cover material for a surface (front surface) of the irradiation unit 3. However, the configuration in FIG. 1 is an example, and the device 2 to which the glass laminate 10 is applied may have any configuration. In addition, the glass laminate 10 is not limited to being used as a cover material on the surface of a vehicle display device, but may be used for any application, such as a cover material of a display device of a smartphone or the like.

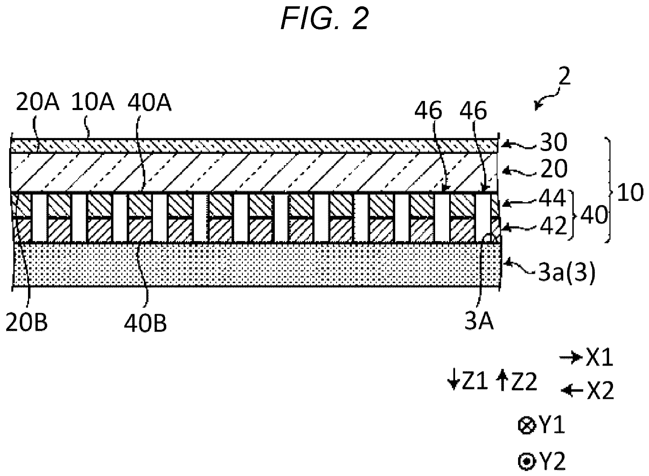

FIG. 2 is a schematic cross-sectional view of the device according to the first embodiment. As shown in FIG. 2, the device 2 according to the first embodiment is a display device in which a display panel 3a as the irradiation unit 3 and the glass laminate 10 are laminated.

Hereinafter, a direction in which the display panel 3a and the glass laminate 10 are laminated is referred to as a Z direction. In addition, a direction orthogonal to the Z direction (a left-right direction in the example in FIG. 2) is referred to as an X direction, and a direction orthogonal to the Z direction and the X direction (direction perpendicular to the paper surface in the example in FIG. 2) is referred to as a Y direction. In addition, one direction along the X direction (right direction in the example in FIG. 1) is defined as a direction X1, and the other direction along the X direction (left direction in the example in FIG. 1) is defined as a direction X2. One direction along the Y direction (direction toward the back of the paper in the example in FIG. 1) is defined as a direction Y1, and the other direction along the Y direction (direction toward the front of the paper in the example in FIG. 1) is defined as a direction Y2. One direction along the Z direction (direction from the glass laminate 10 toward the display panel 3a) is defined as a direction Z1, and the other direction along the Z direction (direction from the display panel 3a toward the glass laminate 10) is defined as a direction Z2.

(Display Unit)

In the first embodiment, the display panel 3a that displays an image is provided as the irradiation unit 3. The display panel 3a is a device that includes a plurality of pixels and that displays an image by individually controlling irradiation of light from each pixel. Examples of the display panel 3a include a liquid crystal display panel and an organic electro luminescence (EL) panel. Since the display panel 3a emits light from a surface on a direction Z2 side, a surface of the display panel 3a on the direction Z2 side is appropriately described as a display surface 3A that displays an image.

(Glass Laminate)

The glass laminate 10 is provided on the display surface 3A of the display panel 3a and covers the display surface 3A. As shown in FIG. 2, the glass laminate 10 includes a glass substrate 20, a functional layer 30, and a colored layer 40. In the glass laminate 10, the colored layer 40, the glass substrate 20, and the functional layer 30 are laminated in this order in the direction Z2. In the example of the present embodiment, since the functional layer 30 is the outermost layer of the glass laminate 10 on the direction Z2 side, a surface of the functional layer 30 on the direction Z2 side constitutes a surface 10A of the glass laminate 10 on the direction Z2 side. In the present embodiment, the surface 10A of the glass laminate 10 is a surface exposed to the outside.

(Glass Substrate)

The glass substrate 20 is a glass-made member having a first main surface 20A on the direction Z2 side and a second main surface 20B on a direction Z1 side.

The glass substrate 20 has a flat shape in the example in FIG. 2, but is not limited thereto. For example, the glass substrate 20 may be curved, or may have a shape including a complicated three-dimensional curved surface shape having one or more curved portions or bent portions. A method of curving the glass substrate 20 may be any method, and for example, the glass substrate 20 having a flat plate shape may be subjected to heat molding to curve the glass substrate 20.

The glass substrate 20 has a thickness of preferably 0.3 mm or more and 5.0 mm or less, more preferably 0.8 mm or more and 3.0 mm or less, and still more preferably 1.0 mm or more and 2.5 mm or less. When the thickness is within this range, both weight reduction and strength of the glass substrate 20 can be achieved, and a cover material of a display device having improved designability can be formed. Note that, the thickness of the glass substrate 20 refers to a distance in a normal direction between the first main surface 20A and the second main surface 20B.

The glass substrate 20 is transparent glass (capable of transmitting visible light). The glass substrate 20 may be formed of a general glass. As the glass substrate 20, for example, an alkali-free glass, a soda lime glass, a soda lime silicate glass, an aluminosilicate glass, a borosilicate glass, a lithium aluminosilicate glass, and a borosilicate glass can be used. In the case of being used in the glass laminate 10, the glass substrate 20 is preferably an aluminosilicate glass or a lithium aluminosilicate glass to which a large stress is easily introduced by a strengthening treatment to obtain a high strength even when the thickness is small. The glass substrate 20 is, for example, preferably strengthened by a chemical strengthening treatment. This kind of chemical strengthening treatment is usually performed by immersing the glass substrate 20 formed into a predetermined shape in a molten salt containing an alkali metal.

(Functional Layer)

The functional layer 30 is provided on the first main surface 20A of the glass substrate 20. The functional layer 30 includes any one or more selected from an antiglare layer, an antireflection layer, and an anti-finger print layer. Note that, in the case where the functional layer 30 includes two or more selected from the antiglare layer, the antireflection layer, and the anti-finger print layer, the layers are preferably laminated in the Z direction. In this case, the lamination order of the layers in the Z direction may be set freely, and in the case where the antiglare layer, the antireflection layer, and the anti-finger print layer are included, the antiglare layer, the antireflection layer, and the anti-finger print layer are preferably laminated in this order in the Z2 direction.

The antiglare layer is a layer that imparts antiglare properties to the glass laminate 10. The antiglare layer may be a layer having an uneven shape. The uneven shape may be directly formed on the first main surface 20A of the glass substrate 20, or may be formed of a layer made of a material different from that of the glass substrate 20. The uneven shape has a surface roughness (root mean square roughness; RMS) of preferably 15 nm to 1000 nm, and more preferably 10 nm to 500 nm. Note that, the antiglare layer may be implemented by an uneven shape provided by subjecting the first main surface 20A of the glass substrate 20 to an antiglare treatment and an etching treatment. In addition, a coating film in which particles having any refractive index are dispersed may be used on the first main surface 20A of the glass substrate 20, or an uneven shape may be formed on a main surface of a transparent resin film to be attached, to implement the uneven shape.

The antireflection layer is a layer that prevents reflection of light. The antireflection layer brings about an effect of reducing a reflectance of the glass laminate 10, reduces glare caused by reflection of light, and, in the case of being used in a display device, improves visibility of the display device. Although the configuration of the antireflection layer is not particularly limited as long as reflection of light can be prevented, for example, a high refractive index layer having a refractive index of 1.9 or more at a wavelength of 550 nm and a low refractive index layer having a refractive index of 1.6 or less at a wavelength of 550 nm may be alternately laminated.

The anti-finger print layer is a layer having a function of making stains less noticeable, and prevents adhesion of various stains such as fingerprint marks, sweat, and dust. From the viewpoint of characteristics of the anti-finger print layer, the anti-finger print layer is preferably formed on the outermost surface of the glass laminate 10 on the direction Z2 side. For example, the anti-finger print layer is made of a fluorine-containing organic compound (a compound having a fluorine-containing organic group) capable of imparting anti-finger print properties, water repellency, and oil repellency. Examples of the fluorine-containing organic compound include a fluorine-containing organosilicon compound.

(Colored Layer)

The colored layer 40 is formed on the second main surface 20B of the glass substrate 20. The colored layer 40 is a layer having a visible light transmittance lower than that of the glass substrate 20. More specifically, the visible light transmittance in a region of the colored layer 40 in which a hole 46 to be described later is not formed is lower than the visible light transmittance of the glass substrate 20. In the first embodiment, the colored layer 40 is preferably formed to have an area larger than that of the display panel 3a, and may be formed over the entire second main surface 20B of the glass substrate 20, for example.

In this manner, since the colored layer 40 is on the second main surface 20B of the glass substrate 20, it can also be said that the glass substrate 20 is provided on the colored layer 40. Accordingly, the colored layer 40 can be protected by the glass substrate 20, and the scratch resistance can be improved. Further, when the glass substrate 20 is provided on the colored layer 40, light from the display panel 3a is visually recognized through an interface between the first main surface 20A of the glass substrate 20 and the functional layer 30, and thus the seamlessness can also be improved.

The colored layer 40 is formed by using, for example, an ink printing method. The printing method is not particularly limited, and preferred examples thereof include an ink jet method, a screen-printing method, and a transfer decoration method. The ink can be used without being particularly limited. As the ink, an inorganic ink containing a ceramic fired body or an organic ink containing a color material such as a dye or a pigment and an organic resin can be used. Note that, for example, in the transfer decoration method, an adhesive layer may be provided between the colored layer 40 and the glass substrate 20.

The colored layer 40 has a thickness of preferably 3 μm or more and 50 μm or less, more preferably 3 μm or more and 30 μm or less, and still more preferably 5 μm or more and 20 μm or less. When the thickness of the colored layer 40 is 3

μm or more, the light from the display panel 3a can be prevented from being transmitted through a portion other than the hole 46 to be described later, and when the thickness of the colored layer 40 is 50 μm or less, a viewing angle can be prevented from being narrowed.

The colored layer 40 preferably includes a light shielding layer 42 and a design layer 44. The light shielding layer 42 and the design layer 44 are arranged in this order in the direction Z2, in other words, the light shielding layer 42 is provided at a position farther from the second main surface 20B of the glass substrate 20 than the design layer 44 (on the direction Z1 side of the design layer 44).

That is, the colored layer preferably includes a design layer and a light shielding layer located on a side farther from the second main surface than the design layer.

The light shielding layer 42 is a layer that shields visible light, and has a visible light transmittance lower than that of the design layer 44. The light shielding layer 42 is, for example, black. The light shielding layer 42 has a transmittance (external transmittance) of preferably 80% or more, more preferably 90% or more, and still more preferably 95% or more for light having a wavelength of 940 nm (infrared-rays). With such a high infrared-ray transmittance, for example, the glass laminate 10 can also be appropriately applied to a cover material of an infrared sensor.

Note that, the infrared-ray transmittance can be measured by, for example, a glass substrate transmittance/reflectance measuring device (trade name: LV-RTM, manufactured by Lambda Vision Inc.).

The design layer 44 is a layer having a visible light transmittance lower than that of the glass substrate 20. The design layer 44 is a layer for imparting designability to the device 2. The design layer 44 may have any pattern, and may have, for example, a wood grain pattern or a marble pattern. When the design layer 44 has a pattern, in other words, the design layer 44 has a different absorption waveform in the visible light region for each position. However, the design layer 44 is not limited to having a pattern, and the entire region may be formed of any one color.

(Hole)

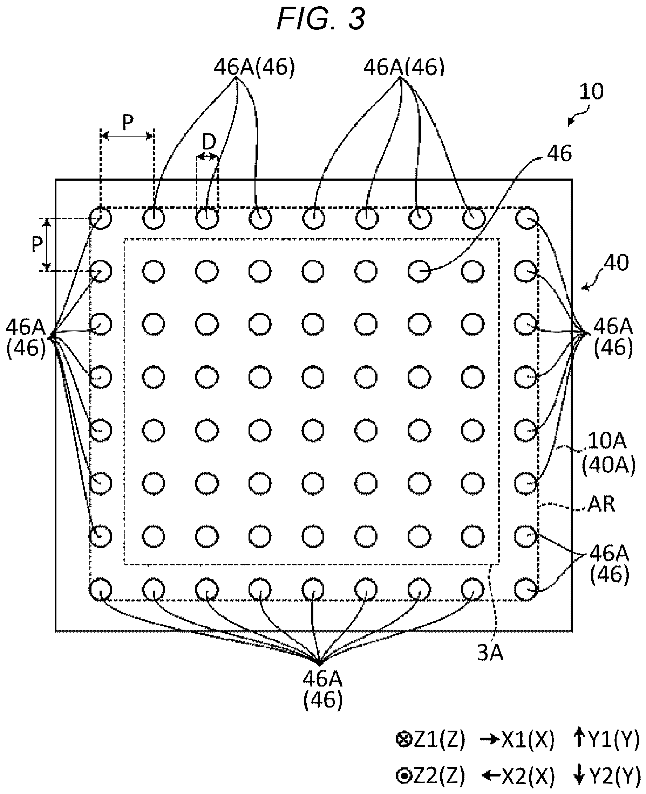

FIG. 3 is a schematic top view of the colored layer 40 in the glass laminate 10 according to the first embodiment. A plurality of holes 46 are formed in the colored layer 40. As shown in FIG. 2, the hole 46 penetrates the colored layer 40 in the Z direction, in other words, the hole 46 is formed from a surface 40A of the colored layer 40 on the direction Z2 side to a surface 40B of the colored layer 40 on the direction Z1 side. As shown in FIG. 3, a shape of the hole 46 viewed from the Z direction is circular, but is not limited thereto, and may be any shape, for example, a polygonal shape or an elliptical shape. The number of the holes 46 may be any value.

The hole 46 has a diameter D of preferably 40 μm or less, more preferably 30 μm or less, still more preferably 10 μm or more and 30 μm or less, and even more preferably 20 μm or more and less than 30 μm. When the diameter D of the hole 46 is within this range, it is possible to appropriately transmit and visually recognize the light from the display panel 3a when the light is irradiated from the display panel 3a while preventing the hole 46 from being visually recognized when the light is not irradiated from the display panel 3a. In addition, when the diameter D of the hole 46 is within this range, it is possible to prevent view of an image from the display panel 3a from being blurred due to moire or the like, and it is possible to improve clarity of the image.

Note that, the diameter D of the hole 46 may refer to a diameter in the case where the hole 46 is circular, and may refer to the longest distance between two points on an outer periphery of the hole 46 in the case where the hole 46 is not circular.

In FIG. 2, each hole 46 formed in the colored layer 40 preferably has a small difference between the diameter (diameter D) at one end portion (surface 40A) of the colored layer 40 and the diameter (diameter D) at the other end portion (surface 40B). In other words, the hole 46 preferably has no tapered shape. Since the hole 46 is not tapered in this manner, the pattern and the display image can be visually recognized more clearly. More specifically, when the hole 46 has a tapered shape in which the diameter decreases toward a viewer side, the design layer appears to overlap the transmitted light from the display panel, and the image is likely to be blurred, and when the hole 46 has a tapered shape in which the diameter increases toward the viewer side, the area of the design layer is smaller than that of the light shielding layer, and the design is less likely to visually recognize. Here, the difference between the diameter at one end portion (surface 40A) and the diameter at the other end portion (surface 40B) being small can be checked by, for example, the following method.

The shape of the hole is measured using a laser microscope, and in the case where a ratio of the diameter at one end portion (surface 40A) to the diameter at the other end portion (surface 40B) of the colored layer 40 to be acquired is 1.2 times or less with the smaller diameter being 1, it is determined that the difference in diameter is small. The ratio of the diameter is more preferably 1.1 times or less. Here, it is preferable that the measurement of hole is performed at arbitrary 10 points.

In the glass laminate, in at least one of the plurality of holes, the ratio of the diameter at one end portion to the diameter at the other end portion in a thickness direction of the colored layer is preferably 1.2 times or less with the smaller diameter being 1.

In the present embodiment, no member is provided in the hole 46, but the present invention is not limited thereto, and a member that transmits visible light may be provided in the hole 46.

(Hole-formed region)

Here, as shown in FIG. 3, a region in which the holes 46 are formed in the entire surface 40A of the colored layer 40 when viewed from the Z direction is referred to as a hole-formed region AR. The hole-formed region AR can also be said to be a region on the surface 10A of the glass laminate 10 including a region overlapping the hole 46 when viewed from the Z direction. More specifically, the hole-formed region AR is a region including the hole 46 (a region overlapping the hole 46 when viewed from the Z direction) and a region other than the hole 46 (a region not overlapping the hole 46 when viewed from the Z direction). A region other than the hole-formed region AR in the entire surface 40A is a region including only a region in which no hole 46 is present.

Further, as shown in FIG. 3, when each hole 46 located on the outermost side when viewed from the Z direction is defined a hole 46A, the hole-formed region AR is a region surrounded by the holes 46A. The hole 46A refers to one of the holes 46 that has no other holes 46 formed within a predetermined distance range outside the hole 46A, and the predetermined distance here is a length equal to or longer than a distance P to be described later. That is, for example, the hole 46A on the most direction X1 side in FIG. 3 is a hole 46 that has no other holes 46 formed within a range of the distance P (within 40 $\mu$m in the example of the present embodiment) on the direction X1 side. The predetermined distance is preferably 0.5 mm or more, and more preferably 1 mm or more.

When viewed from the Z direction, the hole-formed region AR preferably has an area larger than that of the display surface 3A of the display panel 3a. Further, it is preferable that the hole-formed region AR overlaps the entire display surface 3A and has an area larger than that of the display surface 3A when viewed from the Z direction. By making the hole-formed region AR wider than the display surface 3A in this manner, the image of the display panel 3a can be visually recognized over the entire region when the light from the display panel 3a is irradiated. In addition, by making the hole-formed region AR wider than the display surface 3A, even when a transmittance of the hole-formed region AR is increased, the seamlessness is not impaired in a display region. More specifically, for example, the entire surface visually recognized by a driver may be set as the hole-formed region AR, or, for example, the hole-formed region AR and a non-forming region (a region in which no hole is formed) may be connected to each other outside the surface visually recognized by the driver in a form in which a hole interval is gradated (that is, in a form in which the distance P to be described later is gradually increased toward the non-forming region).

In the first embodiment, it is preferable that the glass laminate is a cover glass of a display device, a display panel is provided on the second main surface side, and an area of the hole-formed region is larger than an area of the display panel.

The hole-formed region AR has a visible light transmittance of 5% or more, and preferably 15% or more and 40% or less particularly in Embodiment 1. The visible light transmittance in the hole-formed region AR refers to an average transmittance of the hole-formed region AR with respect to light having a wavelength of 550 nm. When the visible light transmittance is within this range, the colored layer 40 can be appropriately visually recognized when the light is not irradiated from the display panel 3a while the light from the display panel 3a is sufficiently transmitted to such an extent that image information reflected by the display panel 3a can be read, the display panel 3a, the surrounding wiring, and the like can be shielded, and the pattern can be visually recognized when the design layer is present.

The average transmittance of visible light in the hole-formed region AR can be measured as follows. In the state where a light source is in contact with the surface 10A of the glass laminate 10, the surface 10A is irradiated with light having a wavelength of 550 nm from the light source, and an intensity of the light transmitted through the glass laminate 10 and emitted from a surface 10B is measured. Then, a ratio of the intensity of the emitted light to the intensity of the irradiated light (intensity of emitted light/intensity of irradiated light) is calculated as the visible light transmittance in the region (unit region) irradiated with light. When the average transmittance of visible light in the hole-formed region AR is measured, a plurality of unit regions are set over the entire hole-formed region AR, and the transmittance of each unit region is measured by the method described above. Then, the average value of the transmittances of the unit regions set over the entire hole-formed region AR is defined as the average transmittance of the hole-formed region AR.

Note that, as a device used for measuring the visible light transmittance, a transmittance/reflectance measuring device (trade name: LV-RTM, manufactured by Lambda Vision Inc.) may be used.

In the hole-formed region AR, a plurality of holes 46 are formed in a matrix (in the X direction and the Y direction in this example). The distance (interval) P between centers of the adjacent holes 46 in the hole-formed region AR is preferably less than 40 $\mu$m, more preferably 25 $\mu$m or more and 35 $\mu$m or less, and still more preferably 30 $\mu$m or more and 35 $\mu$m or less. When the distance P is within the above range, the colored layer 40 can be visually recognized when light is not irradiated from the display panel 3a. In addition, when the distance P is within the above range, it is possible to prevent the pattern of the colored layer 40 from being visually recognized in an overlapped manner on the image when light is irradiated from the display panel 3a (it is possible to improve design retention property).

Here, a center of gravity of the hole 46 may be used as the center of the hole 46.

The hole-formed region AR has an opening ratio of preferably 25% or more, more preferably 25% or more and 45% or less, and still more preferably 30% or more and 40% or less. When the opening ratio is within this range, the colored layer 40 can be appropriately visually recognized when the light is not irradiated from the display panel 3a while the light from the display panel 3a is appropriately transmitted. In addition, when the opening ratio is within this range, it is possible to prevent a decrease in design retention property.

Note that, the opening ratio is a ratio of a total area of the holes 46 in the hole-formed region AR to the area (whole area) of the entire hole-formed region AR (total area of holes 46/total area of hole-formed region AR).

(Preferred Shape of Hole)

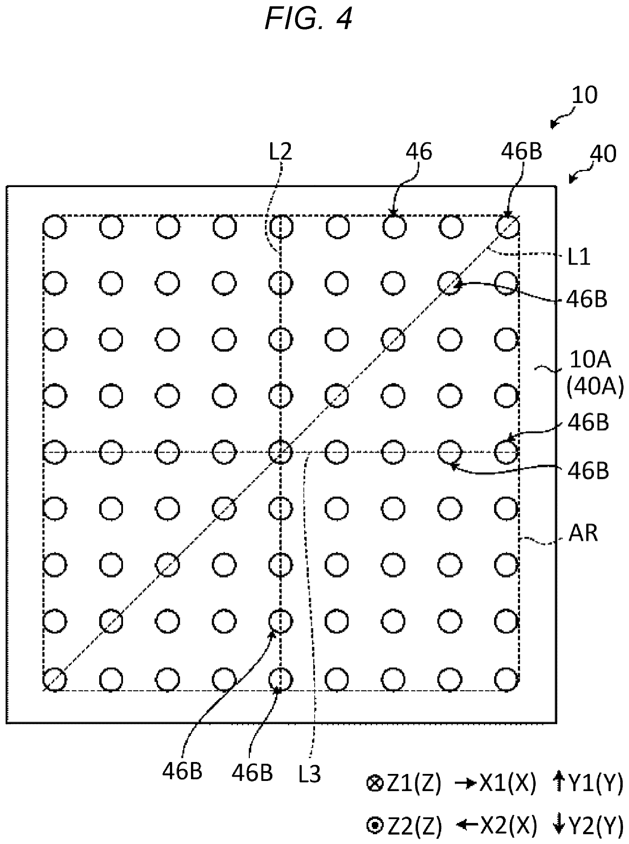

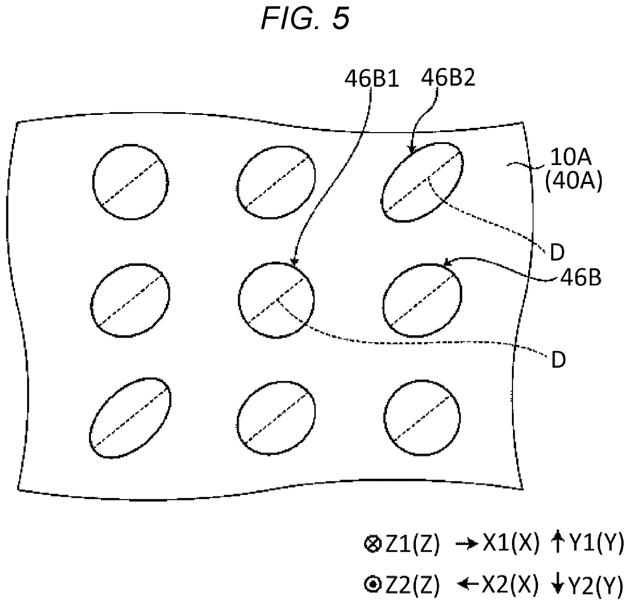

FIG. 4 and FIG. 5 are each a schematic diagram illustrating a preferred shape of the hole. Here, as shown in FIG. 4, the longest straight line among straight lines connecting two points on an outer periphery of the hole-formed region AR is defined as a straight line L1. In addition, a straight line passing through a midpoint of the straight line L1 and inclined 45 degrees counterclockwise with respect to the straight line L1 is defined as a straight line L2. In addition, a straight line passing through the midpoint of the straight line L1 and inclined 45 degrees clockwise with respect to the straight line L1 is defined as a straight line L3. Among the holes 46 in the hole-formed region AR, the hole 46 overlapping at least one of the straight lines L1, L2, and L3 when viewed from the Z direction is defined as a hole 46B.

Here, the hole 46B having a shape closest to a perfect circle among the holes 46B is referred to as a first hole. The shape closest to a perfect circle can be determined by the following method. In a certain hole 46B, a line segment connecting the center of gravity of the hole 46B and any two points on the outer periphery thereof is defined as a diameter d. In the hole 46B, a difference between a maximum value and a minimum value of any diameter d is defined as roundness. Among a plurality of holes 46B, the hole 46B having the minimum roundness is referred to as a first hole.

On the other hand, the hole 46B having the maximum roundness among the holes 46B is referred to as a second hole. It can be said that the second hole is a hole whose hole shape is collapsed and deviated from a perfect circle. FIG. 5 is an example of a schematic diagram in which only holes 46B are extracted. In the example in FIG. 5, a hole 46B1 is the first hole, and a hole 46B2 is the second hole.

In this case, the difference between the roundness of the first hole and the roundness of the second hole is preferably 20 $\mu$m or less, more preferably 10 $\mu$m or less, and still more preferably 5 $\mu$m or less. When the difference between the roundness of the first hole and the roundness of the second hole is small in this manner, the collapse of the shape between the holes 46 is reduced, and the light from the display panel 3a can be uniformly emitted over the entire region.

That is, in the glass laminate, in the case where a line segment connecting a center of gravity of the hole and any two points on an outer periphery of the hole is defined as a diameter of the hole, when a difference between a maximum value and a minimum value of the diameter of the hole is defined as roundness, a hole having minimum roundness among the plurality of holes is defined as a first hole, and a hole having maximum roundness among the plurality of holes is defined as a second hole, a difference between the roundness of the first hole and the roundness of the second hole is preferably 20 $\mu$m or less.

In addition, it is preferable that, among straight lines passing through the center and two points on the outer periphery of the hole 46B, the longest lines of the holes 46B face the same direction. For example, in the example in FIG. 5, the longest lines of the holes 46B face a direction inclined 45 degrees counterclockwise with respect to the direction X. Since the longest lines face the same direction, uniformity in the hole-formed region AR is improved. Note that, the longest lines facing the same direction is not limited to the exactly same direction, and may include that the longest lines of the holes 46B have a direction deviation of 30 degrees or less.

(Pattern Reflectance)

It is preferable that the colored layer in the glass laminate has a pattern reflectance of 7% or more and 15% or less, and the pattern reflectance is defined by the following equation.

(Pattern reflectance) = (double-side luminous reflectance of glass laminate on first main surface side) - (single-side luminous reflectance of glass substrate on first main surface side)

For the measurement of the double-side luminous reflectance of the glass laminate and the single-side luminous reflectance of the glass substrate, a spectrophotometer (for example, a spectrophotometer CM-26d manufactured by Konica Minolta, Inc.) is used, and a spectral reflectance may be measured based on JISZ8722 (2009) in a SCI mode with a measurement diameter of 3 mm to obtain the double-side luminous reflectance and the single-side luminous reflectance.

The double-side luminous reflectance of the glass laminate can be measured by disposing the first main surface 10A side of the glass laminate 10 so as to be in contact with the spectrophotometer including a light receiving portion facing upward.

The single-side luminous reflectance of the glass substrate on the first main surface side can be measured using a spectrophotometer on the first main surface 10A after a light absorbing layer is provided on the second main surface 10B side of the glass laminate 10. As the light absorbing layer, for example, a protective film of KUKKIRI MIERU (layer structure: protective film/adhesive layer/black ink/PET) manufactured by TOMOEGAWA CORPORATION can be peeled off and attached.

The pattern reflectance can be adjusted by controlling the pattern, the hole diameter, and the hole interval and controlling the opening ratio. The pattern reflectance is preferably 7% or more since the colored layer 40 can be easily visually recognized when light is not irradiated from the display panel 3a.

On the other hand, when the pattern reflectance is 15% or less, it is possible to prevent the pattern of the colored layer 40 from being visually recognized in an overlapped manner on the image when light is irradiated from the display panel 3a, and it is possible to improve the design retention property.

The pattern reflectance can be adjusted by controlling the pattern, the hole diameter, and the hole interval and controlling the opening ratio.

(Method for Producing Glass Laminate)

Next, a method for producing the glass laminate 10 described above is described. The present production method includes: preparing the glass substrate 20 having a first main surface and a second main surface; forming the functional layer 30 including any one or more selected from an antiglare layer, an antireflection layer, and an anti-finger print layer on the first main surface 20A side of the glass substrate 20; and forming, on the second main surface 20B side of the glass substrate 20, the colored layer 40 having the hole-formed region AR in which a plurality of holes 46 are provided, in which the hole-formed region AR has a visible light transmittance of 5% or more.

A method of forming the hole 46 in the colored layer 40 may be any method, and the hole 46 may be formed by irradiating the colored layer 40 with laser light.

In the case of curving the glass substrate 20, the glass substrate 20 may be subjected to heat molding to be curved.

In addition, the colored layer 40 may be formed by any method, and may be formed by using a transfer decoration method.

Hereinafter, an example of a more detailed production method is described.

In this example, the glass substrate 20 in which the functional layer 30 is laminated on the first main surface 20A is prepared. In this case, the glass substrate 20 is bent into a predetermined shape (three-dimensional shape) in advance and then subjected to a chemical strengthening treatment.

Next, the colored layer 40 is formed on the second main surface 20B of the prepared glass substrate 20. Examples of the method of forming the colored layer 40 include an ink jet method. The ink jet method is a method of forming a predetermined pattern on the second main surface 20B by ejecting fine droplets of liquid ink from a nozzle in a pulsed manner. Specifically, the glass substrate 20 is positioned with reference to the origin of the nozzle, and the nozzle moves on the second main surface 20B of the glass substrate 20 substantially in parallel to the second main surface 20B while ejecting fine droplets of ink based on a command from a control device. Accordingly, the dot-shaped ink is continuously formed to form the colored layer 40 having a predetermined pattern.

In the ink jet method, a pattern is generally formed while linearly moving the nozzle in one direction. The thickness of the colored layer 40 can be adjusted by controlling an ejection amount and an ejection interval of the ink ejected from the nozzle. In the case of increasing the thickness, it is sufficient to increase the ejection amount or to narrow the ejection interval. In the case of reducing the thickness, it is sufficient to reduce the ejection amount or to widen the ejection interval. Thereafter, the ink is dried and fired to harden the ink, and the colored layer 40 is formed. Note that, the order in which the layers are formed is not limited thereto, and the functional layer 30 may be formed on the first main surface 20A of the glass substrate 20 after the colored layer 40 is formed on the second main surface 20B of the glass substrate 20.

Next, laser processing for removing a part of the colored layer 40 is performed by irradiating the colored layer 40 with laser light to form the hole 46. Accordingly, the glass laminate 10 is produced. Any device may be used as a laser irradiation device for irradiating the laser light, and irradiation conditions of the laser light may be any conditions. For example, the wavelength of the laser is preferably 500 nm to 1100 nm, the irradiation mode of the laser is preferably pulse oscillation, and the pulse width of the pulse oscillation is preferably 1 ps to 100 ns. In addition, the laser may be directly irradiated to the colored layer 40 from the second main surface 20B side, or may be irradiated to the colored layer 40 through the glass from the first main surface 20A side. Preferably, when the laser is directly irradiated to the colored layer 40 from the second main surface 20B side, the irradiation energy of the laser required for removing the colored layer 40 is reduced, and damage to the glass can be reduced.

(Example of Transfer Decoration)

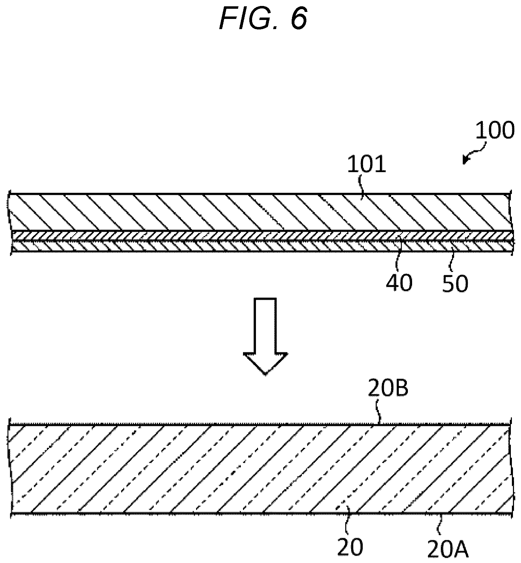

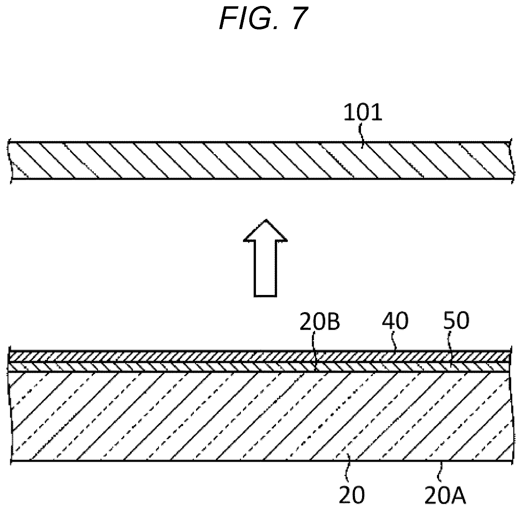

In the above example, the method of forming the colored layer 40 by the inkjet method has been described, but the method is not limited thereto, and the colored layer 40 may be formed by using a screen-printing method or a transfer decoration method. FIG. 6 and FIG. 7 are schematic cross-sectional views showing a procedure of forming the colored layer by transfer decoration. In FIG. 6 and FIG. 7, the functional layer 30 laminated on the glass substrate 20 is omitted.

In the transfer decoration method, a transfer sheet 100 having the colored layer 40 is brought into close contact with the glass substrate 20 under heating conditions to transfer the colored layer 40 to the glass substrate 20. As shown in FIG. 6, the transfer sheet 100 is formed by laminating a transfer substrate (film) 101, the colored layer 40, and an adhesive layer 50. The transfer substrate 101 is formed of a resin material or the like and supports the colored layer 40 and the adhesive layer 50. The transfer substrate 101 may be formed to have a thickness of 20 $\mu$m or more and 100 $\mu$m or less. The colored layer 40 in the present embodiment is formed in a planar shape of a pattern to be transferred and is supported on the transfer substrate 101. The adhesive layer 50 is a layer for adhering the colored layer 40 to the glass substrate 20, and is formed in the same shape as the colored layer 40. The adhesive layer 50 may be formed to have a thickness of 1 $\mu$m or more and 10 $\mu$m or less. Note that, in the example in FIG. 6, the transfer sheet 100 includes the adhesive layer 50 in advance, but the transfer sheet 100 may not include the adhesive layer 50. In this case, for example, an ink having adhesiveness may be used as the colored layer 40, or an adhesive may be additionally applied to the surface of the colored layer 40.

As shown in FIG. 6, the glass substrate 20 and the transfer sheet 100 are disposed such that the second main surface 20B of the glass substrate 20 faces the adhesive layer 50 of the transfer sheet 100. Next, the transfer sheet 100 (transfer substrate 101) is softened by heating the transfer sheet 100. As a heating method, for example, infrared rays, superheated steam, a hot plate, or the like can be used.

In this state, when a space between the glass substrate 20 and the transfer sheet 100 is depressurized to a substantially vacuum state, the softened transfer sheet 100 is shaped by a differential pressure and is brought into close contact with the second main surface 20B of the glass substrate 20. At this time, since the adhesive layer 50 of the transfer sheet 100 faces the second main surface 20B of the glass substrate 20, the transfer sheet 100 adheres to the second main surface 20B of the glass substrate 20 via the adhesive layer 50.

Finally, as shown in FIG. 7, the transfer substrate 101 of the transfer sheet 100 is peeled off from the glass substrate 20, whereby the adhesive layer 50 and the colored layer 40 remain on the second main surface 20B, and the colored layer 40 can be transferred onto the second main surface 20B.

(Effects)

As described above, in the glass laminate 10 according to the first embodiment, the hole-formed region AR having a visible light transmittance of 5% or more is formed in the colored layer 40 on the second main surface 20B of the glass substrate 20. When such a hole-formed region AR is formed in the colored layer 40, the colored layer 40 can be appropriately visually recognized when the light is not irradiated from the display panel 3a while the light from the display panel 3a is appropriately transmitted.

In addition, when the colored layer 40 is covered with the glass substrate 20, the colored layer 40 can be protected by the glass substrate 20 and the scratch resistance can be improved. Further, when the glass substrate 20 is provided on the colored layer 40, the light from the display panel 3a is visually recognized through the interface between the first main surface 20A of the glass substrate 20 and the functional layer, and thus the seamlessness can also be improved.

In the first embodiment, since the hole-formed region AR is wider than the display surface 3A of the display panel 3a, the entire display surface 3A can be the hole-formed region AR. Therefore, according to the first embodiment, when light is irradiated from the display panel 3a, an image can be appropriately visually recognized in the entire display surface 3A, and when light is not irradiated from the display panel 3a, the colored layer 40 can be appropriately visually recognized in the entire region while appropriately providing the seamlessness.

(Second Embodiment)

Next, a second embodiment is described. The second embodiment is different from the first embodiment in use of a light source unit 3b, which is a point light source, as the irradiation unit 3 and a part of the configuration of the hole-formed region AR. In the second embodiment, description of portions having the same configuration as in the first embodiment is omitted.

It is preferable that, in the glass laminate according to the second embodiment, an interval between centers of the holes adjacent to each other in the hole-formed region is 50 $\mu$m or more and 100 $\mu$m or less, and an opening ratio, which is a ratio of a total area of the plurality of holes to a whole area of the hole-formed region, is 5% or more and 15% or less.

In addition, it is preferable that, in the second embodiment, the display device according to the present disclosure includes: the above glass laminate; and a light source unit provided on the second main surface side so as to face the hole-formed region.

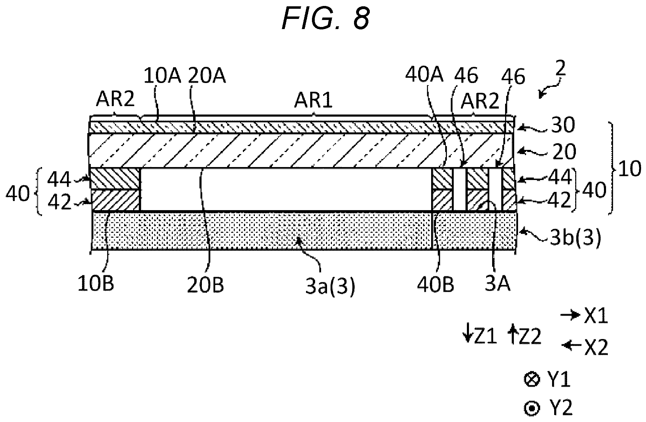

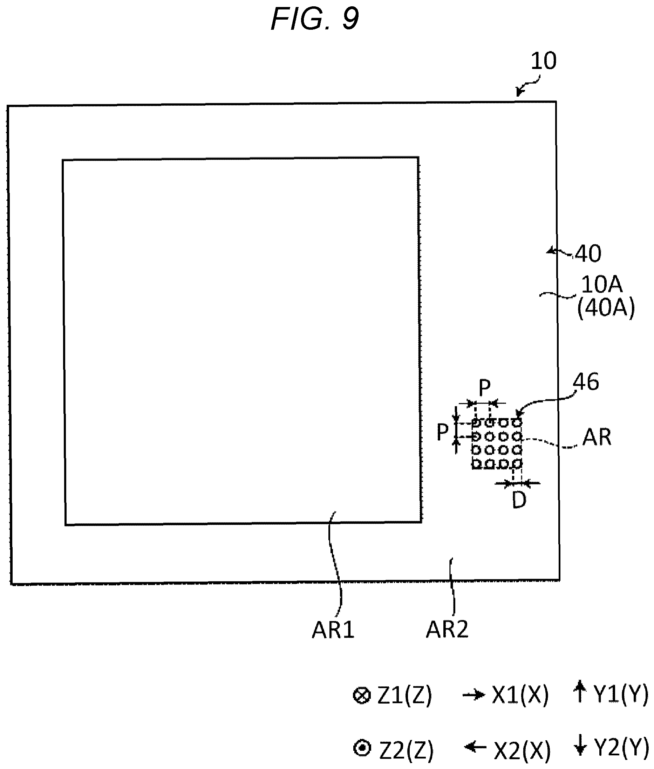

FIG. 8 is a schematic cross-sectional view of a device according to the second embodiment, and FIG. 9 is a schematic top view of a colored layer in a glass laminate according to the second embodiment. As shown in FIG. 8 and FIG. 9, the glass laminate 10 according to the second embodiment includes an opening region AR1 in which the colored layer 40 is not formed and a colored region AR2 in which the colored layer 40 is formed. That is, in the second embodiment, the colored layer 40 is formed in a partial region on the second main surface 20B of the glass substrate 20.

(Opening Region)

The opening region AR1 is a region in which the colored layer 40 is not formed (a region not overlapping the colored layer 40 when viewed from the Z direction) in the entire region of the glass laminate 10 when viewed from the Z direction. As shown in FIG. 8, the display panel 3a is provided on the Z1 direction side of the colored layer 40 and at a position overlapping the opening region AR1 when viewed from the Z direction. Since light from the display panel 3a is emitted to the outside through the opening region AR1, it can be said that an image of the display panel 3a is displayed in the opening region AR1. Note that, the size, shape, and number of the opening regions AR1 may be set freely. In the case of providing a plurality of opening regions AR1, the display panel 3a is preferably provided for each opening region AR1.

(Colored Region)

The colored region AR2 is a region in which the colored layer 40 is formed (a region overlapping the colored layer 40 when viewed from the Z direction) in the entire region of the glass laminate 10 when viewed from the Z direction. In the example in the present embodiment, when viewed from the Z direction, the colored region AR2 is formed so as to surround the opening region AR1, in other words, the colored region AR2 is formed around the opening region AR1. Note that, the size, shape, and number of the colored regions AR2 may be set freely. In addition, a positional relationship between the opening region AR1 and the colored region AR2 and a size relationship between the opening region AR1 and the colored region AR2 may also be set freely.

In this manner, in the second embodiment, the opening region AR1 and the colored region AR2 are formed, but the present invention is not limited thereto, and the opening region AR1 may not be formed, in other words, the colored layer 40 may be formed over the entire second main surface 20B of the glass substrate 20. In the case of not forming the opening region AR1, the display panel 3a overlapping the opening region AR1 may not be provided.

(Hole-formed region)

In the second embodiment, the hole-formed region AR is located in the colored region AR2. That is, at least a partial region of the entire colored region AR2 is the hole-formed region AR. The hole-formed region AR is preferably formed in a part of the colored region AR2.

As shown in FIG. 8, the light source unit 3b as the irradiation unit 3 is provided on the Z1 direction side of the colored layer 40 and at a position overlapping the hole-formed region AR when viewed from the Z direction. The light source unit 3b is a device having a number of pixels (light sources) smaller than that of the display panel 3a that displays an image, and does not display an image by controlling each pixel. In the light source unit 3b, for example, the number of light sources is preferably three or less, and the number of light sources may be one. The light irradiated from the light source unit 3b may be a single color that does not change in color.

In the second embodiment, the position of the hole 46 is preferably set such that an outline of the hole-formed region AR has a predetermined shape. That is, for example, in the example in FIG. 9, the hole 46 is formed such that the hole-formed region AR has a square shape, but is not limited thereto, and the hole 46 may be formed such that the hole-formed region AR has any shape such as an arrow. When the hole 46 is formed such that the hole-formed region AR has a predetermined shape in this manner, the shape of the hole-formed region AR is visually recognized by irradiating light from the light source unit 3b. In the case where the glass laminate according to the present embodiment is used as a cover glass of a display device provided in a vehicle, the predetermined shape is used as a sign to a driver, such as an arrow, or a fuel or air conditioning mark.

The hole-formed region AR may be formed at any position in the colored region AR2, and the number of hole-formed regions AR in the colored region AR2 may also be any value. In the case of forming a plurality of hole-formed regions AR, the light source unit 3b is preferably provided for each hole-formed region AR.

The hole-formed region AR has a visible light transmittance of 5% or more, and preferably 5% or more and 15% or less particularly in the second embodiment. Similar to the first embodiment, the visible light transmittance in the hole-formed region AR refers to an average transmittance of the hole-formed region AR with respect to light having a wavelength of 550 nm. When the visible light transmittance is within this range, the light from the light source unit 3b is sufficiently transmitted to such an extent that a predetermined shape can be appropriately visually recognized when the light is irradiated, and the colored layer 40 is appropriately visually recognized when the light is not irradiated from the light source unit 3b, whereby the internal structure can be shielded and the seamlessness can be improved.

In the second embodiment, the distance (interval) P between the centers of the adjacent holes 46 in the hole-formed region AR is preferably 50 μm or more and 100 μm or less, more preferably 50 μm or more and 80 μm or less, and still more preferably 50 μm or more and 70 μm or less. When the distance P is within the above range, it is possible to prevent a decrease in design retention property while improving the seamlessness.

In the second embodiment, the hole-formed region AR has an opening ratio of preferably 5% or more and 15% or less, and more preferably 10% or more and 15% or less. When the opening ratio is within this range, the colored layer 40 can be appropriately visually recognized when the light is not irradiated from the display panel 3a while the light from the display panel 3a is appropriately transmitted. In addition, when the opening ratio is within this range, it is possible to prevent a decrease in design retention property.

In the second embodiment, a ratio (distance P/thickness) of the distance P between the adjacent holes 46 to the thickness of the glass substrate 20 is preferably 10 or more and 50 or less, and more preferably 10 or more and 30 or less. When the ratio is within this range, the seamlessness can be improved.

(Effects)

As described above, in the glass laminate 10 in the second embodiment, the seamlessness can also be improved while improving the scratch resistance by covering the colored layer 40 with the glass substrate 20, similar to the first embodiment.

In addition, in the second embodiment, since the hole-formed region AR is formed so as to overlap the light source unit 3b, the light from the light source unit 3b is sufficiently transmitted to such an extent that a predetermined shape can be appropriately visually recognized when the light is irradiated, and the colored layer 40 is appropriately visually recognized when the light is not irradiated from the light source unit 3b, whereby the internal structure can be shielded and the seamlessness can be improved.

(Third Embodiment)

Next, a third embodiment is described. The third embodiment is different from the first embodiment in providing an optical sensor 3c instead of the irradiation unit 3 and a part of the configuration of the hole-formed region AR of the hole-formed region AR. In the third embodiment, description of portions having the same configuration as in the first embodiment is omitted.

It is preferable that, in the glass laminate according to the third embodiment, an interval between centers of the holes adjacent to each other in the hole-formed region is 50 μm or more and 100 μm or less, and an opening ratio, which is a ratio of a total area of the plurality of holes to a whole area of the hole-formed region, is 5% or more and 10% or less.

In addition, it is preferable that, in the third embodiment, the device according to the present disclosure includes: the above glass laminate; and an optical sensor provided on the second main surface side so as to face the hole-formed region.

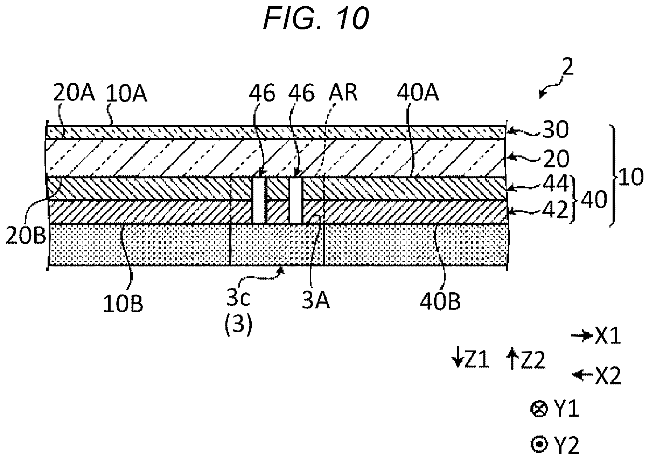

FIG. 10 is a schematic cross-sectional view of the device according to the third embodiment. As shown in FIG. 10, in the third embodiment, the optical sensor 3c is provided on the Z1 direction side of the colored layer 40 and at a position overlapping the hole-formed region AR when viewed from the Z direction. The optical sensor 3c is a sensor that detects light, and may detect, for example, the intensity of irradiated light. In the third embodiment, light (for example, external light) irradiated to the surface 10A of the glass laminate 10 is incident on the optical sensor 3c through the hole 46 in the hole-formed region AR, and the incident light is detected by the optical sensor 3c. That is, the device 2 according to the third embodiment is not a display device that radiates light as in the first embodiment or the second embodiment, but a device that detects light.

Similar to the second embodiment, the hole-formed region AR in the third embodiment is formed in at least a part of the entire colored region AR2 (the region in which the colored layer 40 is formed), and is preferably formed in a part of the colored region AR2.

The hole-formed region AR has a visible light transmittance of 5% or more, and preferably 5% or more and 10% or less particularly in the third embodiment. Similar to the first embodiment, the visible light transmittance in the hole-formed region AR refers to an average transmittance of the hole-formed region AR with respect to light having a wavelength of 550 nm. When the visible light transmittance is within this range, it is possible to transmit light sufficient for the optical sensor 3c to make a response.

In the third embodiment, the distance (interval) P between the centers of the adjacent holes 46 in the hole-formed region AR is preferably 50 μm or more and 100 μm or less, and more preferably 60 μm or more and 90 μm or less. When the distance P is within the above range, it is possible to transmit light sufficient for the optical sensor 3c to make a response while improving the seamlessness.

In the third embodiment, the hole-formed region AR has an opening ratio of preferably 5% or more and 10% or less, and more preferably 5% or more and 8% or less. When the opening ratio is within this range, it is possible to transmit light sufficient for the optical sensor 3c to make a response.

In the third embodiment, a ratio (distance P/thickness) of the distance P between the adjacent holes 46 to the thickness of the glass substrate 20 is preferably 10 or more and 50 or less, and more preferably 10 or more and 30 or less. When the ratio is within this range, the seamlessness can be improved.

As described above, in the glass laminate 10 in the third embodiment, the seamlessness can also be improved while improving the scratch resistance by covering the colored layer 40 with the glass substrate 20, similar to the first embodiment.

In the third embodiment, since the hole-formed region AR is formed so as to overlap the optical sensor 3c, light can be appropriately transmitted to the optical sensor 3c.

Note that, the third embodiment is applicable to the second embodiment. That is, the hole-formed region AR in the third embodiment may be formed in the colored region AR2 in the second embodiment, and the optical sensor 3c may be provided on the direction Z1 side of the hole-formed region AR. In this case, the hole-formed region AR and the light source unit 3b described in the second embodiment may be further provided or may not be provided.

(Effects)

As described above, a glass laminate 10 according to a first aspect of the present disclosure includes: a glass substrate 20 having a first main surface 20A and a second main surface 20B; a functional layer 30 provided on a first main surface 20A side of the glass substrate 20 and including any one or more selected from an antiglare layer, an antireflection layer, and an anti-finger print layer; and a colored layer 40 provided on a second main surface 20B side of the glass substrate 20 and having a hole-formed region AR in which a plurality of holes 46 are provided. The hole-formed region AR has a visible light transmittance of 5% or more. According to the present disclosure, when the colored layer 40 is covered with the glass substrate 20, the seamlessness can be improved while improving the scratch resistance.

A glass laminate 10 according to a second aspect of the present disclosure is the glass laminate 10 according to the first aspect, in which the colored layer 40 includes a design layer 44 and a light shielding layer 42 located on a side (direction Z1) farther from the second main surface 20B than the design layer 44. When the light shielding layer 42 and the design layer 44 are provided, the design layer 44 can allow a desired design to be visually recognized when light is not irradiated while the light shielding layer 42 prevents transmission of light from a region in which the hole 46 is not formed.

A glass laminate 10 according to a third aspect of the present disclosure is the glass laminate 10 according to the first aspect or the second aspect, in which an interval (distance P) between centers of the adjacent holes 46 in the hole-formed region AR is preferably less than 40 μm, and an opening ratio, which is a ratio of a total area of the plurality of holes 46 to a whole area of the hole-formed region AR, is preferably 25% or more. When the opening ratio and the distance P are within these ranges, it is possible to prevent a decrease in design retention property.

A glass laminate 10 according to a fourth aspect of the present disclosure is the glass laminate 10 according to the third aspect, and is preferably a cover glass of a display device, in which a display panel 3a is preferably provided on the second main surface 20B side, and an area of the hole-formed region AR is preferably larger than an area of the display panel 3a (display surface 3A). According to the present disclosure, in a configuration in which the hole-formed region AR is wider than the display surface 3A, it is possible to prevent a decrease in design retention property.

A glass laminate 10 according to a fifth aspect of the present disclosure is the glass laminate 10 according to any one of the first aspect to the fourth aspect, in which the interval between the centers of the adjacent holes 46 in the hole-formed region AR is preferably 50 μm or more and 100 μm or less, and the opening ratio, which is the ratio of the total area of the plurality of holes 46 to the whole area of the hole-formed region AR, is preferably 5% or more and 15% or less. When the opening ratio and the distance P are within these ranges, it is possible to prevent a decrease in design retention property particularly in a configuration provided with the light source unit 3b shown in the second embodiment.

A glass laminate 10 according to a sixth aspect of the present disclosure is the glass laminate 10 according to any one of the first aspect to the fifth aspect, in which the interval between the centers of the adjacent holes 46 in the hole-formed region AR is preferably 50 μm or more and 100 μm or less, and the opening ratio, which is the ratio of the total area of the plurality of holes 46 to the whole area of the hole-formed region AR, is preferably 5% or more and 10% or less. When the opening ratio and the distance P are within these ranges, light can be appropriately transmitted to the optical sensor 3c particularly in a configuration provided with the optical sensor 3c shown in the third embodiment.

A glass laminate 10 according to a seventh aspect of the present disclosure is the glass laminate 10 according to any one of the first aspect to the sixth aspect, in which the hole 46 preferably has a diameter D of 30 μm or less. When the diameter D is within this range, the hole 46 can be prevented from being visually recognized.

A glass laminate 10 according to an eighth aspect of the present disclosure is the glass laminate 10 according to any one of the first aspect to the seventh aspect, in which the glass substrate 20 is preferably curved. According to the present disclosure, in the curved glass substrate 20, the seamlessness can be improved while improving the scratch resistance.

A glass laminate 10 according to a ninth aspect of the present disclosure is the glass laminate 10 according to any one of the first aspect to the eighth aspect, in which in at least one of the plurality of holes 46, a ratio of a diameter at one end portion to a diameter at the other end portion in a thickness direction of the colored layer 40 is preferably 1.2 times or less provided that the smaller diameter is 1. When at least one hole 46 is not tapered in the direction Z2, it is possible to prevent the image from being easily blurred and the design from being difficult to visually recognize.

A glass laminate 10 according to a tenth aspect of the present disclosure is the glass laminate 10 according to any one of the first aspect to the ninth aspect, in which in a case where a line segment connecting a center of gravity of a hole 46B and any two points on an outer periphery of the hole 46B is defined as a diameter d of the hole 46B, when a difference between a maximum value and a minimum value of the diameter d is defined as roundness, a hole having minimum roundness among the holes 46B is defined as a first hole, and a hole having maximum roundness among the holes 46B is defined as a second hole, a difference between the roundness of the first hole and the roundness of the second hole is preferably 20 $\mu$m or less. When the difference between the roundness of the first hole and the roundness of the second hole is small in this manner, the collapse of the shape between the holes 46 is reduced, and the light from the display panel 3a can be uniformly emitted over the entire region.

A glass laminate 10 according to an eleventh aspect of the present disclosure is the glass laminate 10 according to any one of the first aspect to the tenth aspect, in which the colored layer 40 preferably has a thickness of 3 $\mu$m or more and 50 $\mu$m or less. When the thickness of the colored layer 40 is within this range, the light from the display panel 3a can be prevented from being transmitted through a portion other than the hole 46, and the viewing angle can be prevented from being narrowed.

A device 2 (display device) according to a twelfth aspect of the present disclosure includes the glass laminate 10 according to any one of the first aspect to the eleventh aspect, and an irradiation unit 3 provided on the second main surface 20B side (the direction Z1 side) of the glass laminate 10 and configured to irradiate the glass laminate 10 with light. According to the present disclosure, the seamlessness can be improved while improving the scratch resistance.

A device 2 (display device) according to a thirteenth aspect of the present disclosure includes the glass laminate 10 according to the third aspect and a display panel 3a provided on the second main surface 20B side so as to face the hole-formed region AR, and the area of the hole-formed region AR is preferably larger than the area of the display panel 3a. According to the present disclosure, it is possible to prevent a decrease in design retention property.

A device 2 (display device) according to a fourteenth aspect of the present disclosure preferably includes the glass laminate 10 according to the fifth aspect and a light source unit 3b provided on the second main surface 20B side so as to face the hole-formed region AR. According to the present disclosure, it is possible to prevent a decrease in design retention property.

A device 2 (display device) according to a fifteenth aspect of the present disclosure preferably includes the glass laminate 10 according to the sixth aspect and an optical sensor 3c provided on the second main surface 20B side so as to face the hole-formed region AR. According to the present disclosure, it is possible to transmit light sufficient for the optical sensor 3c to make a response while improving the seamlessness.

A method for producing a glass laminate 10 according to a sixteenth aspect of the present disclosure includes: preparing the glass substrate 20 having a first main surface 20A and a second main surface 20B; forming a functional layer 30 including any one or more selected from an antiglare layer, an antireflection layer, and an anti-finger print layer on a first main surface 20A side of the glass substrate 20; and forming, on a second main surface 20B side of the glass substrate 20, a colored layer 40 having a hole-formed region AR in which a plurality of holes 46 are provided, in which the hole-formed region AR has a visible light transmittance of 5% or more. According to the present disclosure, the seamlessness can be improved while improving the scratch resistance.

A method for producing a glass laminate 10 according to a seventeenth aspect of the present disclosure is the production method according to the sixteenth aspect, in which the hole 46 is preferably formed by irradiating the colored layer 40 with laser light. According to the present disclosure, the hole 46 can be appropriately formed using laser light.

A method for producing a glass laminate 10 according to an eighteenth aspect of the present disclosure is the production method according to the sixteenth aspect or the seventeenth aspect, in which the glass substrate 20 is preferably subjected to heat molding to curve the glass substrate 20. According to the present disclosure, the glass substrate 20 can be appropriately curved.

A method for producing a glass laminate 10 according to a nineteenth aspect of the present disclosure is the production method according to any one of the sixteenth aspect to the eighteenth aspect, in which the colored layer 40 is preferably formed by using a transfer decoration method. According to the present disclosure, the colored layer 40 can be appropriately formed.

(Examples)

Next, Examples are described. Note that, the embodiments may be modified as long as the effects of the invention are exhibited.

(First Test)

In a first test, a glass laminate in Example A, as an Inventive Example in which a colored layer was disposed on the second main surface 10B of the glass substrate and an antiglare layer, an antireflection layer, and an anti-finger print layer were formed on the first main surface 10A in this order from a side close to the first main surface 10A, and a glass laminate in Example B, as a Comparative Example in which a colored layer was disposed on the first main surface 10A of the glass substrate (the colored layer was the outermost surface), were prepared.

In Example A, a flat plate-shaped glass substrate (Dragontrail manufactured by AGC Inc.) having a length of 100 mm, a width of 100 mm, and a thickness of 1.1 mm was prepared. The colored layer was formed on the second main surface of the glass substrate by ink jet printing, and a plurality of holes were formed in the colored layer by irradiation with laser light under the conditions described in a second test to be described later. The interval (distance P) between the holes, the diameter (diameter D) of the hole, the opening ratio of the hole-formed region, and the visible light transmittance of the hole-formed region were 55 $\mu$m, 20 $\mu$m, 12%, and 10%, respectively. Note that, the visible light transmittance was measured by using the method described in the above embodiments.

In Example B, the glass laminate was produced in the same manner as in Example A except that the colored layer was disposed on the glass substrate.

(Evaluation)

With respect to the glass laminates in Examples A and B, pencil hardness measurement (JIS K5600 (1999)) as scratch resistance evaluation on the outermost surface and seamlessness evaluation were performed. The seamlessness evaluation was performed using a spectrophotometer (CM-26d manufactured by Konica Minolta, Inc.).

The glass laminate in Example A has hardness of 4H on the outermost surface and has seamlessness higher than that of the glass laminate in Example B. On the other hand, the glass laminate in Example B has hardness of 2B in the outermost surface, and has seamlessness lower than that in Example A. Therefore, it is found that the scratch resistance and the seamlessness can be improved by disposing the glass substrate on the outermost surface.

(Second Test)

Table 1 is a table showing conditions and evaluation results of each example in the second test.

Table 1

| | | | Ex. 1 | Ex. 2 | Ex. 3 | Ex. 4 | Ex. 16 | Ex. 5 | Ex. 6 | Ex. 7 |
|---|---|---|---|---|---|---|---|---|---|---|
| Glass shape | | | Flat | Flat | Flat | Flat | Flat | Flat | Flat | Flat |
| Layer configuration | First main surface side | | Colored layer | Functional layer | Functional layer | Functional layer | Functional layer | Functional layer | Functional layer | Functional layer |
| | Second main surface side | | - | Colored layer | Colored layer | Colored layer | Colored layer | Colored layer | Colored layer | Colored layer |
| Method of forming colored layer | | | Film bonding | Ink jet printing | | | | Pad printing | | |
| Method of forming hole | | | | Laser processing after formation of colored layer | | | | | | |
| Condition | Hole condition | Hole-formed region | - | Partial | | | | | | |
| | | Hole interval (mm) | - | 80 | 55 | 40 | 30 | 35 | 40 | 45 |
| | | Hole diameter (μm) | - | 20 | 20 | 20 | 22 | 22 | 22 | 22 |
| | | Opening ratio (%) | - | 6 | 12 | 23 | 49 | 36 | 27 | 22 |
| | | Hole shape collapse | - | No | | | | | | |
| | Irradiation unit | | - | Simple light source | | | | Display panel | | |
| Visible light transmittance (%) of hole-formed region | | | - | 5 | 10 | 18 | 32 | 23 | 18 | 14 |

| | | | Ex. 1 | Ex. 2 | Ex. 3 | Ex. 4 | Ex. 16 | Ex. 5 | Ex. 6 | Ex. 7 |
|---|---|---|---|---|---|---|---|---|---|---|
| Evaluation | Pattern reflectance | | - | - | - | - | 5 | 10 | 14 | 16 |
| | Hardness of first main surface | | 2B | 4H | 4H | 4H | 4H | 4H | 4H | 4H |
| | During non-display | Seamless feel | | S | S | B | B | B | B | B |
| | | Hole visibility | | A | A | A | A | A | A | A |
| | | Design visibility | | - | - | - | B | A | A | A |
| | During dis-play | Design re-tention prop-erty | | - | - | - | A | A | A | B |
| | | Clarity | | A | A | A | A | A | A | A |
| | | Display uniformity | | A | A | A | A | A | A | A |

EP 4 663 615 A1

| Condition | | | Ex. 8 | Ex. 9 | Ex. 10 | Ex. 11 | Ex. 12 | Ex. 13 | Ex. 14 | Ex. 15 |
|---|---|---|---|---|---|---|---|---|---|---|
| | Glass shape | | Flat | Flat | Flat | Flat | Flat | Single bending | Single bending | Multi-bending |
| | Layer configuration | First main surface side | Functional layer | Functional layer | Functional layer | Functional layer | Functional layer | Functional layer | Functional layer | Functional layer |
| | | Second main surface side | Colored layer | Colored layer | Colored layer | Colored layer | Colored layer | Colored layer | Colored layer | Colored layer |
| | Method of forming colored layer | | Pad printing | | Ink jet printing | | | Pad printing | Film bonding | Transfer decoration |
| | Method of forming hole | | Laser processing after formation of colored layer | | | | | | Bonding colored layer formed with hole | Laser-process after formation of colored layer |
| | Hole condition | Hole-formed region | Partial | Entire surface | - | | | | Entire surface | |
| | | Hole interval (mm) | 50 | 35 | 55 | 82 | 137 | 35 | 35 | 35 |
| | | Hole dia-meter ($\mu$m) | 22 | 22 | 22 | 30 | 52 | 20 | 20 | 20 |
| | | Opening ratio (%) | 18 | 36 | 15 | 12 | 13 | 36 | 36 | 36 |
| | | Hole shape collapse | No | | | | | | Yes | No |
| | Irradiation unit | | Display panel | | Both | | | Display panel | | |
| | Visible light transmittance (%) of hole-formed region | | 11 | 23 | 12 | 10 | 10 | 23 | 23 | 23 |

(continued)

| | | | Ex. 8 | Ex. 9 | Ex. 10 | Ex. 11 | Ex. 12 | Ex. 13 | Ex. 14 | Ex. 15 |
|---|---|---|---|---|---|---|---|---|---|---|
| | Pattern reflectance | | 17 | 10 | - | - | - | 10 | 10 | 10 |
| | Hardness of first main surface | | 4H | 4H | 4H | 4H | 4H | 4H | 4H | 4H |
| Evaluation | During non-display | Seamless feel | A | S | - | - | - | - | - | - |
| | | Hole visibility | A | A | A | A | B | A | A | A |
| | | Design visibility | A | A | - | - | - | A | A | A |
| | During display | Design retention property | B | A | - | - | - | A | A | A |
| | | Clarity | A | A | A | B | C | A | A | A |
| | | Display uniformity | A | A | - | - | - | A | B | A |

(Example 1)

In Example 1, a flat plate-shaped glass substrate (Dragontrail manufactured by AGC Inc.) having a length of 100 mm, a width of 100 mm, and a thickness of 1.1 mm was prepared. A colored layer was bonded to the first main surface of the glass substrate using a roll laminator to obtain a glass laminate. The colored layer in Example 1 is obtained by repeating steps of performing pad-printing on a PET (polyethylene terephthalate) film (Lumina #75-S10 manufactured by TORAY INDUSTRIES, INC.) using a colorant containing an acrylic resin as a base polymer and drying the film, thereby giving five brown base layers and two pattern layers. The thickness of the colored layer was 12 μm. In the glass laminate in Example 1, the outermost surface was the colored layer.

Note that, no hole was formed in the colored layer in Example 1.

(Examples 2 to 4 and 10 to 12)

In Examples 2 to 4 and 10 to 12, a functional layer in which an antiglare layer, an antireflection layer, and an anti-finger print layer were laminated in this order from the glass substrate side was provided on the first main surface of the glass substrate in the same manner as in Example 1. Then, an IJ ink (TABK-6020 manufactured by TORAY INDUSTRIES, INC.) was printed on the second main surface of the glass substrate to form a colored layer. The thickness of the colored layer was 5 μm. In the glass laminates in Examples 2 to 4 and 10 to 12, the outermost surface was the functional layer.

In Examples 2 to 4 and 10 to 12, the colored layer was irradiated with laser light under the following conditions to form a plurality of holes, thereby obtaining a glass laminate. An irradiation unit was disposed on the second main surface side of the glass laminate to obtain a display device.

· Processing head: galvanometer scanner
· Lens: f 163 mm
· Transmitter name: TruMicro 5000
· Laser wavelength: 515 nm
· Pulse width: 8 ps

Among the examples, the example in which the holes were formed over the entire surface of the glass laminate was referred to as "hole-formed region: entire surface" in Table 1, and the example in which the holes were formed only in a partial region of the glass laminate was referred to as "hole-formed region: partial" in Table 1.

Table 1 shows the interval (distance P) between the holes, the diameter (diameter D) of the hole, the opening ratio of the hole-formed region, and the visible light transmittance of the hole-formed region in each example. Note that, the visible light transmittance was measured by using the method described in the above embodiments.

The first hole and the second hole were extracted by the method described in the above embodiments, and the difference in diameter between the first hole and the second hole was measured. A difference of 20 μm or less was evaluated as "hole shape collapse: no" in Table 1, and a difference of more than 20 μm was evaluated as "hole shape collapse: yes" in Table 1.

Table 1 shows the kinds of the irradiation units disposed on the second main surface side of the glass laminate. The simple light source in Table 1 is a single white LED, and the display panel is a liquid crystal display panel.

(Examples 5 to 9 and 13)

In Examples 5 to 9 and 13, a functional layer in which an antiglare layer, an antireflection layer, and an anti-finger print layer were laminated in this order from the glass substrate side was provided on the first main surface of the glass substrate in the same manner as in Example 1. Then, a colored layer was formed on the second main surface of the glass substrate. The colored layer in Examples 5 to 9 and 13 is obtained by repeating steps of performing pad-printing on a glass substrate using a colorant containing an acrylic resin as a base polymer and performing drying, thereby giving a woodgrain design with five brown base layers and two pattern layers.

In Examples 5 to 9 and 13, glass laminates and display devices were obtained in the same manner as in Examples 2 to 4 and 10 to 12 except for the above points and the points shown in Table 1.

However, in Example 13, as the glass substrate, a curved glass substrate having a curved portion of single bending (one bending axis) was used.

(Example 14)

In Example 14, a functional layer in which an antiglare layer, an antireflection layer, and an anti-finger print layer were laminated in this order from the glass substrate side was provided on the first main surface of the glass substrate in the same manner as in Example 1. Then, a colored layer was formed on the second main surface of the glass substrate in the same method as in Example 1.

In Example 14, a glass laminate and a display device were obtained in the same manner as in Examples 2 to 4 and 10 to 12 except for the above points and the points shown in Table 1. However, in Example 14, as the glass substrate, a curved glass substrate having a curved portion of single bending (one bending axis) was used.

(Example 15)

In Example 15, a functional layer in which an antiglare layer, an antireflection layer, and an anti-finger print layer were laminated in this order from the glass substrate side was provided on the first main surface of the glass substrate in the same manner as in Example 1. Then, a colored layer was transferred and decorated on the second main surface of the glass substrate using a vacuum molding device. The colored layer in Example 15 is obtained by repeating steps of performing screen-printing on a PP (polypropylene) film using a colorant containing an acrylic resin as a base polymer and drying the film, thereby giving a woodgrain design with five brown base layers and two pattern layers.

In Example 15, a glass laminate and a display device were obtained in the same manner as in Examples 2 to 4 and 10 to 12 except for the above points and the points shown in Table 1. However, in Example 15, as the glass substrate, a curved glass substrate having a curved portion of multi-bending (two bending axes) was used.

(Evaluation)

The hardness of the outermost surface of the glass laminate in each example was measured by the same method as in the first test. The measurement results for the hardness are shown in Table 1.

With respect to the display devices in Examples 2 to 15, the pattern reflectance, the seamlessness, and hole visibility during non-display (when light was not irradiated from the irradiation unit), and the design retention property, the clarity, and display uniformity during display (when light was irradiated from the irradiation unit) were evaluated. The results are shown in Table 1.

The pattern reflectance was measured by using the method described in the description. As the spectrophotometer, a spectrophotometer CM-26d manufactured by Konica Minolta, Inc. was used.

Regarding the seamlessness, a $\Delta E$ value was measured using a spectrophotometer CM-26d manufactured by Konica Minolta, Inc., and visual check was performed in a dark room. A case where the $\Delta E$ value was less than 1.5 was evaluated as S, a case where the $\Delta E$ value was 1.5 or more and less than 3.0 was evaluated as A, and a case where the $\Delta E$ value was 3.0 or more was evaluated as B.

The hole visibility was visually checked in a dark room. A case where the hole was not visible was evaluated as A, and a case where the hole was visible was evaluated as B.

The design retention property was visually evaluated during display on the display panel 3a. A case where the design was not visible was evaluated as A, a case where the design was slightly visible was evaluated as B, and a case where the design was visible was evaluated as C.

The clarity was visually evaluated during display on the display panel 3a. A case where the image was not blurred was evaluated as A, a case where the image was slightly blurred was evaluated as B, and a case where the image was blurred was evaluated as C.

The display uniformity was visually evaluated during display on the display panel 3a. A case where an image was accurately displayed was evaluated as A, and a case where an image was not accurately displayed was evaluated as B.

When Example 1 which is a Comparative Example is compared with Examples 2 to 15 which are Inventive Examples, it can be seen that the hardness in Examples 2 to 15 is high, and the scratch resistance can be improved by disposing the glass substrate on the outermost surface. In addition, as shown in the first test, it can be seen that the seamlessness can be improved also by disposing the glass substrate on the outermost surface.

Although the embodiments of the present invention have been described above, the embodiments are not limited to the contents of these embodiments. In addition, the components described above should include those that can be easily conceived by a person skilled in the art, those that are substantially the same, and those within a so-called equivalent range. Further, the above components can be appropriately combined. Further, various omissions, substitutions, or modifications of the components can be made without departing from the gist of the embodiments described above.

INDUSTRIAL APPLICABILITY

According to the present invention, it is possible to provide a glass laminate, a display device, a device, and a method for producing a glass laminate, which are capable of improving the scratch resistance and the seamlessness.

Although the present invention has been described in detail with reference to specific embodiments, it is apparent to those skilled in the art that various changes and modifications can be made without departing from the spirit and scope of the present invention.

The present application is based on a Japanese Patent Application (No. 2023-016958) filed on February 7, 2023, the contents of which are incorporated herein by reference.

REFERENCE SIGNS LIST

1 steering shaft
2 device (display device)
3 irradiation unit
3a display panel
3b light source unit
3c optical sensor
10 glass laminate
20 glass substrate
20A first main surface
20B second main surface
30 functional layer
40 colored layer
42 light shielding layer
44 design layer
46 hole
AR hole-formed region
AR1 opening region
AR2 colored region
50 adhesive layer
100 transfer sheet
101 transfer substrate film

**Claims**

1.  A glass laminate comprising:

    a glass substrate having a first main surface and a second main surface;
    a functional layer provided on a first main surface side of the glass substrate and including any one or more selected from an antiglare layer, an antireflection layer, and an anti-finger print layer; and
    a colored layer provided on a second main surface side of the glass substrate and having a hole-formed region in which a plurality of holes are provided, wherein
    the hole-formed region has a visible light transmittance of 5% or more.

2.  The glass laminate according to claim 1, wherein the colored layer includes a design layer and a light shielding layer located on a side farther from the second main surface than the design layer.

3.  The glass laminate according to claim 1 or 2, wherein an interval between centers of the holes adjacent to each other in the hole-formed region is less than 40 $\mu$m, and an opening ratio, which is a ratio of a total area of the plurality of holes to a whole area of the hole-formed region, is 25% or more.

4.  The glass laminate according to claim 3, wherein the glass laminate is a cover glass of a display device, a display panel is provided on the second main surface side, and the area of the hole-formed region is larger than an area of the display panel.

5.  The glass laminate according to claim 1 or 2, wherein an interval between centers of the holes adjacent to each other in the hole-formed region is 50 $\mu$m or more and 100 $\mu$m or less, and an opening ratio, which is a ratio of a total area of the plurality of holes to a whole area of the hole-formed region, is 5% or more and 15% or less.

6.  The glass laminate according to claim 1 or 2, wherein an interval between centers of the holes adjacent to each other in the hole-formed region is 50 $\mu$m or more and 100 $\mu$m or less, and an opening ratio, which is a ratio of a total area of the plurality of holes to a whole area of the hole-formed region, is 5% or more and 10% or less.

7. The glass laminate according to claim 1 or 2, wherein the hole has a diameter of 30 $\mu$m or less.

8. The glass laminate according to claim 1 or 2, wherein the glass substrate is curved.

9. The glass laminate according to claim 1 or 2, wherein in at least one of the plurality of holes, a ratio of a diameter at one end portion to a diameter at the other end portion in a thickness direction of the colored layer is 1.2 times or less, provided that a smaller diameter is 1.

10. The glass laminate according to claim 1 or 2, wherein
in a case where a line segment connecting a center of gravity of the hole and any two points on an outer periphery of the hole is defined as a diameter of the hole, when a difference between a maximum value and a minimum value of the diameter of the hole is defined as roundness, a hole having minimum roundness among the plurality of holes is defined as a first hole, and a hole having maximum roundness among the plurality of holes is defined as a second hole, a difference between the roundness of the first hole and the roundness of the second hole is 20 $\mu$m or less.

11. The glass laminate according to claim 1 or 2, wherein the colored layer has a thickness of 3 $\mu$m or more and 50 $\mu$m or less.

12. The glass laminate according to claim 1 or 2, wherein

the colored layer has a pattern reflectance of 7% or more and 15% or less, provided that the pattern reflectance is defined by the following equation,
(pattern reflectance) = (double-side luminous reflectance of glass laminate on first main surface side) - (single-side luminous reflectance of glass substrate on first main surface side).

13. A display device comprising:

the glass laminate according to claim 1 or 2; and
an irradiation unit provided on the second main surface side of the glass laminate and configured to irradiate the glass laminate with light.

14. A display device comprising:

the glass laminate according to claim 3; and
a display panel provided on the second main surface side so as to face the hole-formed region, wherein
the area of the hole-formed region is larger than an area of the display panel.

15. A display device comprising:

the glass laminate according to claim 5; and
a light source unit provided on the second main surface side so as to face the hole-formed region.

16. A device comprising:

the glass laminate according to claim 6; and
an optical sensor provided on the second main surface side so as to face the hole-formed region.

17. A method for producing a glass laminate, the method comprising:

preparing a glass substrate having a first main surface and a second main surface;
forming a functional layer including any one or more selected from an antiglare layer, an antireflection layer, and an anti-finger print layer on a first main surface side of the glass substrate; and
forming, on a second main surface side of the glass substrate, a colored layer having a hole-formed region in which a plurality of holes are provided, wherein
the hole-formed region has a visible light transmittance of 5% or more.

**18.** The method for producing a glass laminate according to claim 17, wherein the holes are formed by irradiating the colored layer with laser light.

**19.** The method for producing a glass laminate according to claim 17 or 18, wherein the glass substrate is subjected to heat molding to curve the glass substrate.

**20.** The method for producing a glass laminate according to claim 17 or 18, wherein the colored layer is formed by using a transfer decoration method.

FIG. 1

*FIG. 2*

# FIG. 3

⊗Z1(Z)  →X1(X)  ↑Y1(Y)

⊙Z2(Z)  ←X2(X)  ↓Y2(Y)

## FIG. 4

⊗Z1(Z) →X1(X) ↑Y1(Y)
⊙Z2(Z) ←X2(X) ↓Y2(Y)

## FIG. 5

# FIG. 6

## FIG. 7

## FIG. 8

## FIG. 9

10

40

10A
(40A)

P

P

46

AR

D

AR1    AR2

⊗ Z1(Z)    → X1(X)    ↑ Y1(Y)

⊙ Z2(Z)    ← X2(X)    ↓ Y2(Y)

## FIG. 10

## INTERNATIONAL SEARCH REPORT

| International application No. |
|---|
| **PCT/JP2024/003721** |

**A. CLASSIFICATION OF SUBJECT MATTER**

*C03C 17/34*(2006.01)i; *B32B 3/24*(2006.01)i; *B32B 17/06*(2006.01)i; *C03C 17/42*(2006.01)i; *G02B 5/00*(2006.01)i; *G02B 5/02*(2006.01)i; *G09F 9/00*(2006.01)i

FI: C03C17/34 A; B32B3/24 Z; B32B17/06; C03C17/34 Z; C03C17/42; G09F9/00 313; G09F9/00 366Z; G09F9/00 338; G09F9/00 302; G02B5/00 Z; G02B5/02 B

According to International Patent Classification (IPC) or to both national classification and IPC

**B. FIELDS SEARCHED**

Minimum documentation searched (classification system followed by classification symbols)

B32B1/00-43/00; C03C15/00-23/00; G02B5/00-5/136; G09F9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/004581 A1 (PANASONIC IP MAN CORP.) 06 January 2022 (2022-01-06) entire text | 1-20 |
| A | JP 2008-281906 A (TOPPAN PRINTING CO., LTD.) 20 November 2008 (2008-11-20) entire text | 1-20 |
| A | WO 2020/040195 A1 (DAI NIPPON PRINTING CO., LTD.) 27 February 2020 (2020-02-27) entire text | 1-20 |
| A | JP 2005-186353 A (MURAKAMI CORP.) 14 July 2005 (2005-07-14) entire text | 1-20 |
| P, X | JP 2023-160790 A (CORNING INCORPORATED) 02 November 2023 (2023-11-02) paragraphs [0038]-[0062], fig. 1, 2A-2C | 1, 4, 7-8, 11, 13, 16-18 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

International application No.

**PCT/JP2024/003721**

| Patent document cited in search report | | | Publication date (day/month/year) | Patent family member(s) | | | Publication date (day/month/year) |
|---|---|---|---|---|---|---|---|
| WO | 2022/004581 | A1 | 06 January 2022 | US whole document | 2023/0221471 | A1 | |
| JP | 2008-281906 | A | 20 November 2008 | (Family: none) | | | |
| WO | 2020/040195 | A1 | 27 February 2020 | US whole document | 2021/0178733 | A1 | |
| | | | | EP | 3843065 | A1 | |
| | | | | CN | 112424855 | A | |
| | | | | JP | 2020-34886 | A | |
| JP | 2005-186353 | A | 14 July 2005 | WO | 2005/063481 | A1 | |
| JP | 2023-160790 | A | 02 November 2023 | US paragraphs [0051]-[0075], fig. 1, 2A-2C | 2023/0339043 | A1 | |
| | | | | EP | 4265575 | A1 | |
| | | | | CN | 116929543 | A | |
| | | | | KR | 10-2023-0150232 | A | |

Form PCT/ISA/210 (patent family annex) (July 2022)

**REFERENCES CITED IN THE DESCRIPTION**

**Patent documents cited in the description**

- WO 2020040195 A
- JP 2023016958 A